(19) **Europäisches Patentamt**

**European Patent Office**

**Office européen des brevets**

(11) **EP 1 043 569 B1**

(12) **EUROPÄISCHE PATENTSCHRIFT**

(45) Veröffentlichungstag und Bekanntmachung des Hinweises auf die Patenterteilung:
**01.10.2003   Patentblatt 2003/40**

(51) Int Cl.$^7$: **G01D 3/02**, G01D 18/00

(21) Anmeldenummer: **00201193.0**

(22) Anmeldetag: **31.03.2000**

(54) **Verfahren zum Offsetabgleich zweier orthogonaler Sensorsignale**

Method for offset compensation of two orthogonal sensor signals

Méthode de compensation de décalage pour deux signaux orthogonaux

(84) Benannte Vertragsstaaten:
**DE FR GB**

(30) Priorität: **09.04.1999   DE 19915968**

(43) Veröffentlichungstag der Anmeldung:
**11.10.2000   Patentblatt 2000/41**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder: **Dietmayer, Klaus**
**52064 Aachen (DE)**

(74) Vertreter: **Volmer, Georg, Dipl.-Ing. et al**
**Philips Intellectual Property & Standards GmbH,**
**Postfach 50 04 42**
**52088 Aachen (DE)**

(56) Entgegenhaltungen:
**US-A- 4 468 968        US-A- 4 729 110**
**US-A- 5 297 063**

• **PATENT ABSTRACTS OF JAPAN vol. 012, no. 133 (P-693), 22. April 1988 (1988-04-22) & JP 62 255815 A (NEC HOME ELECTRONICS LTD), 7. November 1987 (1987-11-07)**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Offsetabgleich zweier orthogonaler Sensorsignale S(x) und S(y), welche von zwei Sensoren (2,3) geliefert werden und vorzugsweise für Winkelmessungen vorgesehen sind, wobei der Offsetabgleich in Abhängigkeit der geometrischen Anordnung dreier Meßwertepaare P1(x1,y1), P2(x2,y2) und P3 (x3,y3) der Sensorsignale S(x) und S(y) in einem Koordinatensystem erfolgt, wobei der Mittelpunkt eines Kreises, auf dem die drei Meßwertpaare P1(x1,y1), P2(x2,y2) und P3(x3,y3) in dem Koordinatensystem angeordnete sind, relativ zum Ursprung des Koordinatensystems Mittelpunktkoordinaten $\Delta x$ und $\Delta y$ aufweist.

Viele bekannte Meßsysteme bestimmen die Meßgröße, die zu bestimmen ist, aus zwei Meßsignalen x und y, die zueinander orthogonal sind, also einen Phasenversatz von 90° zueinander aufweisen. Somit erzeugt der eine Meßkanal eine Meßgröße proportional zum Sinus der gesuchten Größe, der andere ein Signal proportional zum Kosinus der Größe. Eine derartige Anordnung erlaubt z.B. bei Winkelmeßsystemen eine Berechnung des Winkels. Eine Veränderung der Größe der Signalamplitude ist dabei unerheblich, so lange diese Amplitude sich in beiden Meßkanälen identisch mit der Temperatur oder durch andere Einflüsse verändert. Allerdings wirken sich sogenannte Offsets negativ auf die Meßgenauigkeit aus. Bei diesen Offsets handelt es sich quasi um überlagertes Gleichspannungs- bzw. Gleichstromsignal, das auf ein Minimum zu reduzieren ist. Der Offsetabgleich bei der Produktion der Sensoren ist aufwendig und wird vermieden. Es wird statt dessen versucht, einen Offsetabgleich bei der Anwendung einzusetzen.

Hierzu ist aus dem US-Patent 5,297,063 eine Anordnung bekannt, welche eine Onlinekompensation der Offsets dadurch vornimmt, daß der Kreismittelpunkt eines Kreises berechnet wird, auf dem drei Meßwertpaare liegen. Dieser Kreismittelpunkt ist aufgrund bekannter geometrischer Zusammenhänge zu berechnen. Der Nachteil dieser Anordnung besteht darin, daß die Vorgehensweise relativ aufwendig ist und ein Mikroprozessor benötigt wird.

Ferner ist aus den Patent Abstracts of Japan vol. 012, no. 133 (P-6339, 22. April 1988) eine Korrekturmethode für den Azimuth-Fehler eines Fahrzeugs bekannt, bei der der durch die Magnetisierung des Fahrzeugs verursachte Fehler bei der Azimuth Bestimmung mittels einer Auswertung dreier Abtastwerte des Ausgangssignals eines Magnetsensors erzielt wird. Diese Korrektur wird automatisch während Winkeländerungen des Fahrzeugs vorgenommen.

Es ist Aufgabe der Erfindung, ein Verfahren mit möglichst einfachem Offsetabgleich anzugeben.

Diese Aufgabe wird erfindungsgemäß dadurch gelöst, daß in einem sich wiederholenden Zyklus in jedem Zyklusdurchlauf eine Vorzeichenbestimmung der Werte $\Delta x$ und $\Delta y$ der Mittelpunktkoordinaten des Kreises, auf dem drei Meßwertepaare P1(x1,y1), P2(x2,y2) und P3(x3,y3) angeordnet sind, vorgenommen wird, wobei in jedem Zyklusdurchlauf wenigstens eines der Meßwertpaare von dem im vorigen Zyklus verwendeten Meßwertpaaren abweicht, und daß Offsetkorrektursignale Kx und Ky erzeugt werden, mit denen die Sensorsignale S(x) und S(y) beaufschlagt werden,
daß das Offsetkorrektursignal Kx in jedem Zyklusdurchlauf in Abhängigkeit des Vorzeichens der Mittelpunktkoordinate $\Delta x$ gegenüber dem Offsetkorrektursignal Kx des vorigen Zyklusdurchlaufs um einen Korrekturwert KWx erhöht oder abgesenkt wird und daß das Offsetkorrektursignal Ky in jedem Zyklusdurchlauf in entsprechender Weise in Abhängigkeit des Vorzeichens der Mittelpunktkoordinate $\Delta y$ um einen Korrekturwert KWy erhöht oder abgesenkt wird.

Es wird bei dem erfindungsgemäßen Verfahren von dem geometrischen Zusammenhang ausgegangen, daß drei Meßwertepaare, die den Sensorsignalen S(x) und S(y) entnommen werden, auf einem Kreis liegen, dessen Mittelpunkt die Offsets $\Delta x$ und $\Delta y$ der beiden Sensorsignale S(x) und S(y) kennzeichnet. Bei dem erfindungsgemäßen Verfahren wird auf eine genaue Berechnung der Offsets $\Delta x$ und $\Delta y$ verzichtet, um den Aufwand möglichst gering zu halten. Statt dessen wird lediglich eine Vorzeichenbestimmung der Werte von $\Delta x$ und $\Delta y$ vorgenommen, die wesentlich einfacher möglich ist und dennoch eine sehr gute Korrektur ermöglicht. Dies wird dadurch erreicht, daß in jedem Zyklusdurchlauf für jeweils drei Meßwertepaare eine Korrektur vorgenommen wird, so daß die Korrektur der Werte $\Delta x$ und $\Delta y$ mit jedem neuen Abgleichvorgang immer kleiner wird, so daß abhängig von der gewählten Schrittweite der Veränderung die Werte $\Delta x$ und $\Delta y$ so klein wie möglich eingestellt werden, und so ein optimaler Offsetabgleich erfolgt.

Es wird in einem zyklischen Vorgang eine Vorzeichenbestimmung der Werte von $\Delta x$ und $\Delta y$ vorgenommen. Dabei bilden $\Delta x$ und $\Delta y$ die Mittelpunktkoordinaten desjenigen Kreises, auf dem drei Meßwertpaare P1(x1,y1), P2(x2,y2) und P3(x3,y3), die vorher zu ermitteln sind und von denen wenigstens ein Meßwertpaar sich von den in dem vorigen Zyklusdurchlauf verwendeten Meßwertpaaren unterscheiden sollte, liegen.

Ferner werden Offsetkorrektursignale Kx und Ky erzeugt, die den Sensorsignalen S(x) und S(y) überlagert werden. Die Sensorsignale S(x) und S(y) werden so mit Hilfe der Ofisetkorrektursignale Kx und Ky korrigiert, wodurch ein Offsetabgleich dieser Signale erfolgt.

Dies erfolgt für die beiden Offsetkorrektursignale in gleicher Weise, jedoch unabhängig voneinander. So wird für das Offsetkorrektursignal Kx in jedem Zyklusdurchlauf für jreweils drei Meßwertpaare P1(x1,y1), P2(x2,y2) und P3 (x3,y3) zunächst das erwähnte Vorzeichen der Mittelpunktkoordinate $\Delta x$ bestimmt. Sodann wird in Abhängigkeit dieses Vorzeichens das Offsetkorrektursignal Kx um einen Korrekturwert KWx erhöht oder abgesenkt, abhängig von dem ermittelten Vorzeichen. Bei dem Offsetkorrektursignal Kx wird von demjenigen des vorherigen Zyklus ausgegangen, d.h. das Offsetkorrektursignal Kx wird in jedem Zyklus abhängig von dem in diesem Zyklus ermittelten Vorzeichen der

Mittelpunktkoordinate $\Delta x$ um den Korrekturwert KWx erhöht oder abgesenkt. Auf diese Weise wird das Offsetkorrektursignal Kx in jedem Zyklus in der Weise erhöht oder abgesenkt, daß der Betrag der Mittelpunktkoordinate $\Delta x$ immer weiter abnimmt und sich einem Minimum annähert, dessen Größe abhängig ist von der Größe des gewählten Korrekturwertes KW(x). Es handelt sich hierbei um ein iteratives Verfahren, bei dem in mehreren Meßschritten, also mehreren Zyklusdurchläufen, ein Offsetabgleich erfolgt, der nahezu optimal ist und dennoch nur sehr geringen Aufwand erfordert, da für die Messung eine Vorzeichenbestimmung der Werte von $\Delta x$ ausreichend ist.

Die Vorgehensweise für den Offsetabgleich des Signals S(y) entspricht der beschriebenen Vorgehensweise für das Sensorsignal S(x); jedoch wird der Offsetabgleich für beide Signale unabhängig voneinander vorgenommen.

Die in jedem Zyklus vorgenommene Veränderung des Wertes des Offsetkorrektursignals Kx um den Korrekturwert KWx kann in vorteilhafter Weise mit geringem Aufwand mittels Integration vorgenommen werden, wie dies gemäß einer Ausgestaltung der Erfindung nach Anspruch 2 vorgesehen ist. Die Integratoren erhalten dann in jedem Zyklus lediglich ein Signal, das angibt, ob eine Veränderung der Offsetkorrektursignale um einen Korrekturwert nach oben oder um einen Korrekturwert nach unten vorgenommen werden soll, woraufhin die vorher aufintegrierten Werte, die die Offsetkorrektursignale des vorherigen Zyklus bilden, um den neuen Korrekturwert erhöht oder vermindert werden.

Die Korrekturwerte KWx und KWy können einen vorgebbaren Wert haben, wie dies nach einer weiteren Ausgestaltung der Erfindung nach Anspruch 3 vorgesehen ist. Der Wert kann dann beispielsweise je nach Einsatzgebiet verschieden vorgegeben werden.

Haben die Korrekturwerte KWx und KWy in jedem Zyklus den gleichen Wert, so kann eine Korrektur des Offsetabgleichs in jedem Zyklus auch nur um diesen Wert erfolgen. Ist gegebenenfalls ein schnellerer Offsetabgleich gewünscht oder erforderlich, so ist es vorteilhaft, wie gemäß einer weiteren Ausgestaltung der Erfindung nach Anspruch 4 vorgesehen ist, die Werte von KWx und KWy nicht konstant zu wählen, sondern von dem für die beiden Mittelpunktkoordinaten $\Delta x$ und $\Delta y$ im vorherigen Zyklus gefundenen Vorzeichen und die in dem vorherigen Zyklus gewählten Korrekturwerte KWx und KWy abhängig zu machen. Dies geschieht dann in der Weise, daß beispielsweise der Korrekturwert KWx in einem Zyklusdurchlauf n dann verdoppelt wird, wenn in dem vorherigen Zyklusdurchlauf n-1 für die Mittelpunktkoordinate $\Delta x$ gleiche Vorzeichen wie in dem aktuellen Zyklus n ermittelt wurde. In diesem Falle wird erkannt, daß der Offsetabgleich bezüglich des Sensorsignals S(x) in der gleichen Richtung zu erfolgen hat bzw. mit dem gleichen Vorzeichen zu erfolgen hat wie im vorherigen Zyklusdurchlauf. Es kann dann eine Verdopplung des Korrekturwertes KWx vorteilhaft vorgenommen werden, da angenommen werden kann, daß in der gleichen Richtung ein größerer Offsetabgleich erforderlich ist. Dieser Vorgang würde sich dann so weit wiederholen, bis das Vorzeichen der Mittelpunktkoordinate $\Delta x$ wechselt, so daß wieder auf den Ausgangswert des Wertes von KWx, der vorgebbar oder fest sein kann, zurückgegangen wird. Im Ergebnis wird also dann, wenn über mehrere Zyklen hinweg ein Offsetfehler des Signals von S(x) mit gleichem Vorzeichen festgestellt wird, der Korrekturvorgang des Offsetsabgleich beschleunigt. Selbstverständlich wird für das Signal S(y) in gleicher Weise vorgegangen, jedoch wiederum unabhängig von der Korrektur des Signals S(x), d.h. die Veränderung der Werte KWx und KWy wird unabhängig voneinander vorgenommen.

Für eine hinreichende Meßgenauigkeit der Mittelpunktkoordinaten $\Delta x$ und $\Delta y$ und somit auch des Offsetabgleichs ist gemäß einer weiteren Ausgestaltung nach Anspruch 5 vorgesehen, daß die drei Meßwertpaare P1(x1,y1), P2(x2,y2) und P3(x3,y3) bestimmte geometrische Bedingungen erfüllen sollten, die dazu rühren, daß die Bestimmung des Vorzeichens der Mittelpunktkoordinaten $\Delta x$ und $\Delta y$ mit hinreichender Genauigkeit möglich ist.

Wie gemäß einer weiteren Ausgestaltung der Erfindung nach Anspruch 6 vorgesehen ist, können die Offsetkorrektursignale Kx und Ky vorteilhaft mittels Begrenzung begrenzt werden, so daß sie nicht beliebige Werte annehmen können. Durch die Begrenzung wird verhindert, daß der Algorithmus aufgrund lang anhaltender Störungen der Signale divergieren kann.

In Verbindung mit den variablen Korrekturwerten KWx und KWy gemäß Anspruch 4 kann darüber hinaus vorgesehen sein, bei Erreichen der Begrenzung die Korrekturwerte KWx und KWy wieder auf ihre Ausgangswerte zurückzusetzen.

Die Grenzwerte für die Begrenzung können, wie gemäß einer weiteren Ausgestaltung nach Anspruch 7 vorgesehen ist, bei einem Neustart des Verfahrens gesetzt werden.

Bei einer derartigen Initialisierung kann, wie gemäß nach Anspruch 8 vorgesehen ist, auch ein Setzen der Startwerte der Offsetkorrektursignale Kx und Ky vorgenommen werden.

In weiteren Ausgestaltungen der Erfindung ist in den Ansprüchen 9 und 10 für den Abgleich der Sensorsignale S(x) und S(y) konkret angegeben, wie für drei Meßwertepaare P1(x1,y), P2(x2,y2) und P3(x3,y3) eine Vorzeichenbestimmung auf relativ einfache Weise anhand konkreter, in den Ansprüchen angegebener Gleichungen, vorgenommen werden kann. Dabei wurde in Anspruch 10 für die Bestimmung des Vorzeichens der Mittelpunktkoordinate $\Delta y$ eine Koordinatentransformation vorgenommen, da auf diese Weise für die Bestimmung des Vorzeichens von $\Delta y$ ähnliche Gleichungen wie diejenigen für die Bestimmung des Vorzeichens von $\Delta x$ gemäß Anspruch 9 verwendet werden können. In den Gleichungen sind lediglich die entsprechenden Koordinatenwerte der Meßwertepaare einzusetzen; ansonsten sind die Gleichungen für die beiden Mittelpunktkoordinaten $\Delta x$ und $\Delta y$ infolge der Transformation gleich.

Nachfolgend wird anhand der Zeichnung ein Ausführungsbeispiel der Erfindung näher erläutert. Es zeigen:

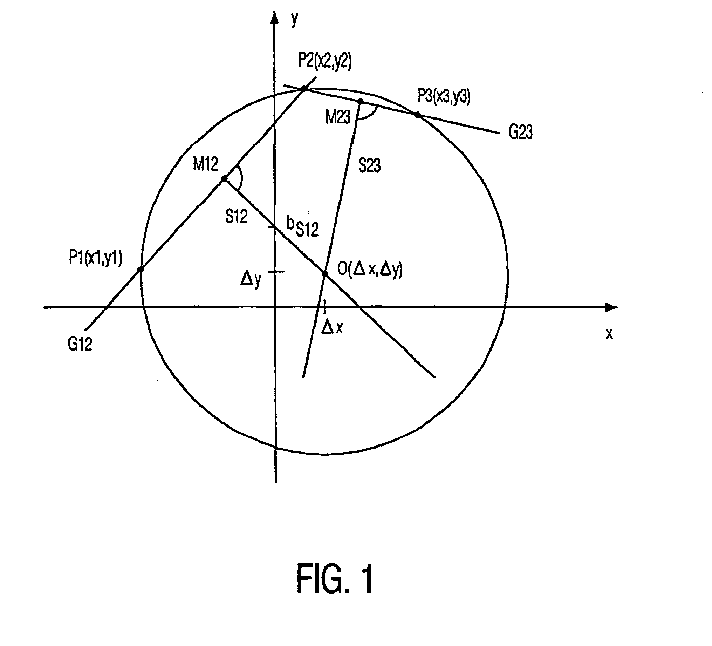

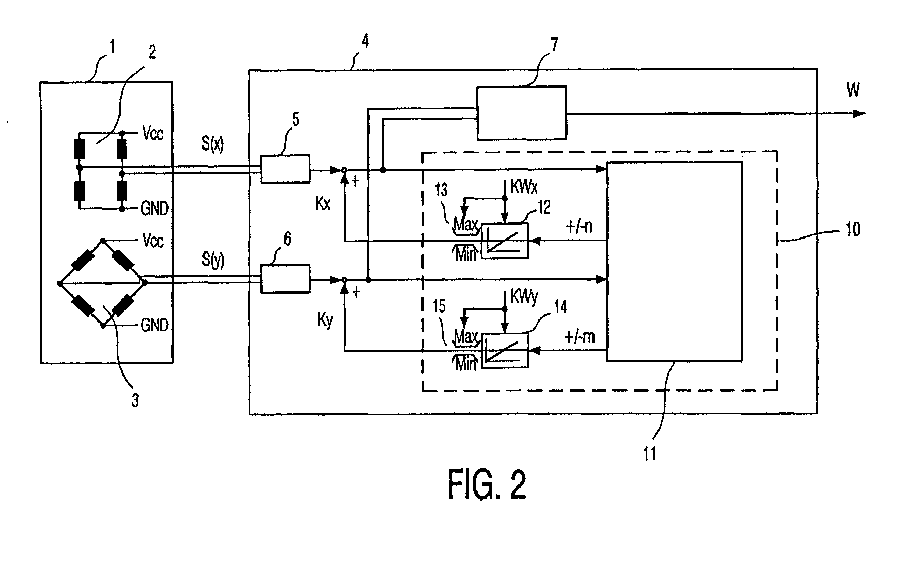

Fig. 1 ein kartesisches Koordinatensysem mit drei darin eingetragenen Meßwertepaaren P1(x1,y1), P2(x2,y2) und P3(x3,y3) mit einer geometrischen Ermittlung der Mittelpunktkoordinaten $\Delta x$ und $\Delta y$ in dem Koordinatensystem und Fig. 2 eine Anordnung zur Winkelberechnung aus zwei Sensorsignalen S(x) und S(y) zweier Sensoren mit einer erfindungsgemäßen Anordnung zum Offsetabgleich dieser Sensorsignale.

Fig. 1 zeigt ein kartesisches Koordinatensystem x/y, in dem drei Meßwertepaare P1(x1,y1), P2(x2,y2) und P3(x3,y3) aufgetragen sind. Diese Bezeichnung ist so zu verstehen, daß zu einem bestimmten Zeitpunkt t1 die Werte der Sensorsignale S(x) und S(y) bestimmt werden, so daß sich in dem xy-Koordinatensystem der Wert P1(x1,y1) ergibt.

Da die verwendeten Sensorsignale S(x) und S(y) orthogonal zueinander sind, lassen sie sich wie folgt beschreiben

$$x = A \cdot \cos(\alpha) \qquad \text{Gl. 1}$$

$$y = A \cdot \sin(\alpha) \qquad \text{Gl. 2}$$

In diesen Gleichungen ist $\alpha$ die gesuchte Größe, also beispielweise der zu bestimmende Winkel. Die Amplitude A der Signale ist im Prinzip für die Meßwertbestimmung nicht wesentlich, jedoch nur unter der Voraussetzung, daß A in den Gl. 1 und 2 identisch ist.

Trägt man die Meßwertepaare in einem kartesischen Koordinatensystem auf, wie dies in Fig. 1 geschehen ist, so beschreiben sie einen Kreis. Der Radius dieses Kreises hängt von der Amplitude A ab und kann daher z.B. temperaturabhängig sein. Die gesuchte Größe ist unabhängig von A, da gilt

$$\alpha = \arctan \frac{y}{x} \qquad \text{Gl. 3}$$

Jedoch treten dann Probleme auf, wenn eines der beiden Signale einen Gleichanteil bzw. Offset aufweist, da dann die oben aufgeschriebenen Beziehungen nicht mehr gelten und die Auswertung nach Gl. 3 zu einem Fehler führen würde.

Ein solcher Beispielsfall ist in Fig. 1 eingetragen, wobei die drei Meßwertepaare P1(x1,y1), P2(x2,y2) und P3 (x3,y3) im Prinzip beliebige Meßwerte der Sensorsignale S(x) und S(y) darstellen, von denen in jedem Zyklusdurchlauf der Offsetkorrektur wenigstens ein Meßwertpaar neu bestimmt wird. Die Darstellung gemäß Fig. 1 zeigt, daß gemäß oben beschriebenem Zusammenhang die drei Meßwertepaare auf einem Kreis liegen. Die Bestimmung des Mittelpunktes des Kreises und dessen Koordinaten $\Delta x$ und $\Delta y$ in dem kartesischen Koordinatensystem ist geometrisch recht einfach dadurch möglich, daß jeweils die Mittelsenkrechten S12 und S23 auf die Verbindungsgerade G12 zwischen den Punkten P1(x1,y1) und P2(x2,y2) und auf die Verbindungsgerade G23 zwischen den Meßwertepaaren P2(x2,y2) und P3(x3,y3) gebildet werden. Der Schnittpunkt dieser Mittelsenkrechten S12 und S23 bildet den Kreismittelpunkt mit den Koordinaten $\Delta x$ und $\Delta y$. Diese Koordinaten $\Delta x$ und $\Delta y$ stellen den Offset für beide Sensorsignale dar.

Die unmittelbare Berechnung der genauen Werte der Mittelpunktkoordinaten $\Delta x$ und $\Delta y$ ist jedoch sehr aufwendig und wird erfindungsgemäß dadurch vermieden, daß lediglich eine Bestimmung der Vorzeichen der Mittelpunktkoordinaten $\Delta x$ bzw. $\Delta y$ erfolgt.

Dabei wird in einem Meßzyklus vorgegangen, der sich wiederholt. In jedem neuen Meßzyklusdurchlauf werden neue Meßwertepaare P1(x1,y1), P2(x2,y2) und P3(x3,y3) zur Bestimmung der Vorzeichen $\Delta x$ und $\Delta y$ herangezogen; wenigstens sollte eines dieser drei Meßwertpaare gegenüber den in dem letzten Zyklusdurchlauf verwendten Meßwertpaaren neu sein.

Im folgenden wird erläutert, wie aufgrund der geometrischen bzw. mathematischen Zusammenhänge zwischen den drei Meßwertepaaren (P1(x1,y1), P2(x2,y2) und P3(x3,y3) eine Bestimmung des Vorzeichens der Mittelpunktkoordinaten $\Delta x$ und $\Delta y$ vorgenommen werden kann.

Der Mittelpunkt M12 der Verbindungsgeraden G12 zwischen den Meßwertepaar P1(x1,y1) und P2(x2,y2) und die Bestimmung des Mittelpunktes M23 der Verbindungsgeraden G23 zwischen den beiden Meßwertepaaren P2 (x2,y2) und P3(x3,y3) kann gemäß den Gleichungen:

$$x_{M12} = \frac{x_1 + x_2}{2}, \; y_{M12} = \frac{y_1 + y_2}{2} \qquad\qquad \text{Gl.4.1}$$

$$x_{M23} = \frac{x_2 + x_3}{2}, y_{M23} = \frac{y_2 + y_3}{2} \qquad\qquad \text{Gl.4.2}$$

vorgenommen werden. Dabei gilt für die Steigung der Geraden G12:

$$\alpha_{G12} = \frac{y_2 - y_1}{x_2 - x_1} \qquad\qquad \text{Gl. 5}$$

Da die Mittelsenkrechte S12 senkrecht auf der Geraden G12 steht, gilt für die Steigung der Mittelsenkrechten S12:

$$\alpha_{S12} = -\frac{x_2 - x_1}{y_2 - y} \qquad\qquad \text{Gl. 6}$$

Zur vollständigen Bestimmung der Geradengleichung der Mittelsenkrechten S12 fehlt noch deren y-Achsenabschnitt $b_{S12}$. Unter Verwendung des bekannten Punktes M12 auf der Verbindungsgeraden ergibt sich aus der allgemeinen Geradengleichung:

$$b_{S12} = y - a_{S12}x = y_{M12} - a_{S12}x_{M12} = \frac{y_1 + y_2}{2} + \frac{x_2 - x_1}{y_2 - y_1} \cdot \frac{x_1 + x_2}{2} \qquad\qquad \text{Gl. 7}$$

Somit ergibt sich unter Verwendung der nunmehr bekannten Werte $a_{S12}$ und $b_{S12}$ die Geradengleichung:

$$y = a_{S12}x + b_{S12} = \frac{x_2 - x_1}{y_2 - y_2}\left(-x + \frac{x_1 + x_2}{2}\right) + \frac{y_1 + y_2}{2} \qquad\qquad \text{Gl. 8}$$

In entsprechender Weise ergibt sich für die Mittelsenkrechte S23 die Geradengleichung:

$$y = a_{S23}x + b_{S23} = \frac{x_3 - x_2}{y_3 - y_2}\left(-x + \frac{x_2 + x_3}{2}\right) + \frac{y_2 + y_3}{2} \qquad\qquad \text{Gl. 9}$$

mit den Werten:

$$a_{S23} = -\frac{x_3 - x_2}{y_3 - y_2} \qquad\qquad \text{Gl.9.1}$$

$$b_{S23} = \frac{y_2 + y_3}{2} + \frac{x_3 - x_2}{y_3 - y_2} \cdot \frac{x_2 + x_3}{2} \qquad\qquad \text{G.9.2}$$

Durch Gleichsetzungen der beiden Gleichungen für die Mittelsenkrechte S12 und die Mittelsenkrechte S23 erhält man den Schnittpunkt der beiden Geraden mit den Koordinaten Δx und Δy zu:

$$\Delta x = \frac{b_{S23} - b_{S12}}{a_{S12} - a_{S23}} \qquad \text{Gl. 10}$$

$$\Delta y = \frac{a_{S23} b_{S12} - a_{S12} b_{S23}}{a_{S23} - a_{S12}} \qquad \text{Gl. 11}$$

Für die Mittelpunktkoordinate $\Delta x$ gilt somit, daß diese > 0 ist, wenn das Vorzeichen des Zählers des Bruches in der Gl. 10 gleich dem Vorzeichen dessen Nenners ist. Sind die Vorzeichen verschieden, ist $\Delta x < 0$.

Für das erfindungsgemäße Verfahren zum Offsetabgleich ist diese Vorzeichenbestimmung bereits hinreichend.

Die Bestimmung des Vorzeichens aus der Gl. 11 erscheint hingegen aufwendiger. Es ist daher vorteilhaft, eine Koordinatentransformation in der Weise vorzunehmen, daß ein Austausch der Koordinatenachsen erfolgt. Es gilt dabei die Transformationsvorschrift $KS\{x,y\} \rightarrow KS\{y',x'\}$.

Da hierbei im Prinzip die Koordinatenachsen und somit auch die entsprechenden x- und y-Werte der Meßwertepaare ausgetauscht werden, ergibt sich dann für $\Delta y$ die Gleichung:

$$\Delta y = \frac{b'_{S23} - b'_{S12}}{a'_{S12} - a'_{S23}} \qquad \text{Gl. 16,}$$

wobei für die dort eingetragenen Gleichungswerte gilt:

$$a'_{S12} = \frac{y_2 - y_1}{x_2 - x_1} \qquad \text{Gl. 12}$$

$$b'_{S12} = \frac{x_1 + x_2}{2} + \frac{y_2 - y_1}{x_2 - x_1} \frac{y_2 + y_1}{2} \qquad \text{Gl 13}$$

$$a'_{S23} = - \frac{y_3 - y_2}{x_3 - x_2} \qquad \text{Gl. 14}$$

$$b'_{S23} = \frac{x_2 + x_3}{2} + \frac{y_3 - y_2}{x_3 - x_2} \frac{y_3 + y_2}{2} \qquad \text{Gl. 15}$$

Somit kann auch die Bestimmung des Vorzeichens von $\Delta y$ durch die Bestimmung der Vorzeichen des Bruches in der Gleichung für $\Delta y$ vorgenommen werden. Es gilt auch hier, daß $\Delta y$ dann größer oder gleich 0 ist, wenn das Vorzeichen des Zählers des Bruches gleich dem Vorzeichen des Nenners ist. Sind die Vorzeichen der beiden Ausdrücke verschieden, ist $\Delta y < 0$.

Bei dieser Vorgehensweise ergibt sich der Vorteil, daß die Formeln für $\Delta x$ und $\Delta y$ im Prinzip gleich aufgebaut sind und somit die Bestimmung für beide Werte auf gleiche Weise erfolgen kann; es sind lediglich verschiedene Koordinatenwerte der drei Meßwertepaare P1(x1,y1), P2(x2,y2) und P3(x3,y3) in die Gleichungen einzusetzen.

In jedem Zyklus bestimmt die erfindungsgemäße Anordnung gemäß dieser Gleichungen die Vorzeichen von $\Delta x$ und $\Delta y$ und beaufschlagt die Sensorsignale S(x) und S(y) mit Offsetkorrektursignalen Kx und Ky, deren Größe in jedem Zyklusdurchlauf abhängig von den in dem Zyklusdurchlauf bestimmten Vorzeichen der Werte von $\Delta x$ und $\Delta y$ ist. Auf diese Weise wird in jedem Zyklusdurchlauf eine Verringerung der Beträge der Werte $\Delta x$ und $\Delta y$ erzielt, so daß der Offset minimiert wird.

Dies wird im folgenden anhand der Darstellung von Fig. 2 näher erläutert, welche einerseits eine Anordnung zur Winkelbestimmung zeigt, in der wiederum eine erfindungsgemäße Anordnung zum Offsetabgleich vorgesehen ist.

Die Fig. 2 zeigt diese Anordnungen in Form eines Blockschaltbildes. Es ist eine Sensoranordnung 1 vorgesehen, welche zwei Sensoren 2 und 3 aufweist, die wiederum jeweils vier in Form einer Meßbrücke angeordnete Sensorelemente aufweisen. Die beiden Sensoren 2 und 3 sind so zueinander angeordnet, daß sie zueinander orthogonale Sensorsignale S(x) und S(y) liefern. Die Signale S(x) und S(y) sind also zueinander um 90° phasenverschoben.

Die Sensorsignale S(x) und S(y) werden einer Anordnung 4 zur Winkelbestimmung zugeführt. Innerhalb der Anordnung 4 werden das Sensorsignal S(x) einem Analog/Digital-Umsetzer 5 und das Sensorsignal S(y) einem Analog/Digital-Umsetzer 6 zugeführt. Aus diesen digitalisierten Sensorsignalen bestimmten Mittel 7 zur Winkelberechnung den gesuchten Winkel $\alpha$ gemäß der oben angegebenen anhand von Fig. 1 erläuterten Beziehungen der Sensorsignale S(x) und S(y).

Die Mittel 7 liefern ein Signal W, welches diesen Winkel $\alpha$ angibt.

Wie bereits oben erläutert, ist Voraussetzung für eine möglichst genaue Bestimmung des Winkels, daß die Sensorsignale S(x) und S(y) keinen Offset aufweisen, d.h. keinen Gleichanteil beinhalten.

Um einen gegebenenfalls in den Sensorsignalen S(x) bzw. S(y) enthaltenen Gleichanteil zu minimieren, ist in der Anordnung 4 eine erfindungsgemäße Anordnung zum Offsetabgleich mit Korrekturmitteln 10 vorgesehen.

Die Korrekturmittel 10 beinhalten eine Steuerung 11, der die digitalisierten Sensorsignale S(x) und S(y) zugeführt werden.

Die Korrekturmittel 10 erzeugen ausgangsseitig Offsetzkorrektursignale Kx und Ky, die den digitalisierten Sensorsignalen S(x) und S(y) überlagert werden. Auf diese Weise wird eine Offsetkorrektur der digitalisierten Sensorsignale S(x) und S(y) vorgenommen, so daß die Mittel zur Winkelberechnung eine fehlerfreie Bestimmung des Winkels W vornehmen können. Die Korrekturmittel 10 arbeiten dabei unabhängig von den Mitteln 7 zur Winkelbestimmung und nehmen diese Offsetkorrektur zyklusweise vor.

In jedem Zyklusdurchlauf sammeln die Korrekturmittel 11 zunächst die Koordinatenwerte dreier Meßwertepaare, die den digitalisierten Sensorsignalen S(x) und S(y) entnommen werden. Es werden also die Koordinaten dreier Meßwerte P1(x1,y1), P2(x2,y2) und P3(x3,y3) gesammelt. Diese Meßwerte können im Prinzip beliebig sein, sollten jedoch auf dem Kreis, wie in Fig. 1 angedeutet, nicht zu nahe beieinander liegen; außerdem sollte sich wenigstens eines dieser drei Meßwertpaare von den im vorigen Zyklusdurchlauf verwendeten Meßwertpaaren unterscheiden. Hierfür kann als Erwägung beispielsweise das Kriterium herangezogen werden, daß die Geraden G12 und G23 gemäß Fig. 1 wenigstens einen Winkel von 5° oder besser 10° zueinander aufweisen sollten.

Nachdem die Steuerung 11 in den Korrekturmitteln 10 die Werte dieser drei Meßwertepaare gesammelt hat, kann aufgrund der oben angegebenen Gleichungen eine Bestimmung der Vorzeichen von $\Delta x$ und $\Delta y$ vorgenommen werden. Dies erfolgt innerhalb der Steuerung 11. Dabei wird anhand der oben erläuterten geometrischen Beziehungen bzw. der erläuterten Gleichungen vorgegangen.

Ist diese Vorzeichenbestimmung erfolgt, gibt die Steuerung 11 abhängig von den ermittelten Vorzeichen entsprechende Signale an Integratoren 12 bzw. 14. Die Integratoren 12 bzw. 14 liefern ausgangsseitig Offsetkorrektursignale Kx bzw. Ky. Gegebenenfalls können den Integratoren 12 bzw. 14 Begrenzer 13 bzw. 15 nachgeschaltet sein, die die Offsetkorrektursignale begrenzen und gegebenenfalls bei Erreichen der Grenzwerte ein Rücksetzen der Offsetzkorrektursignale Kx und Ky auf Sollwerte oder auf Ausgangswerte vornehmen.

Wie oben erläutert, gibt die Steuerung 11 in jedem neuen Zyklusdurchlauf, dem drei Meßwertepaare P1(x1,y1), P2(x2,y2) und P3(x3,y3), von denen wenigstens eines neu ist, zugrunde liegen, abhängig von dem gefundenen Vorzeichen des Wertes $\Delta x$ ein entsprechendes Signal an den Integrator 12. Der Integrator 12 liefert zunächst noch das Offsetkorrektursignal Kx, das über die vorherigen Zyklusdurchläufe hinweg aufintegriert gebildet wurde. Wird beispielsweise für einen aktuellen Zyklusdurchlauf n gefunden, daß der Wert $\Delta x \geq 0$ ist, so wird ein entsprechendes Signal an den Integrator 12 gegeben und der Wert des Offsetkorrektursignals Kx aus dem vorherigen Zyklusdurchaluf wird um einen Korrekturwert KWx mittels des Integrators 12 erhöht. In dem neuen Zyklusduchlauf wird also der Wert des Offsetkorrektursignals Kx um den Wert KWx erhöht. In entsprechender Weise wird der Wert des Offsetkorrektursignals Kx um den Wert KWx vermindert, wenn die Steuerung 11 feststellt, daß $\Delta x \leq 0$ ist. In dieser Weise wird fortlaufend in jedem neuen Zyklusdurchaluf das Offsetkorrektursignal Kx um den Korrekturwert KWx erhöht oder vermindert, abhängig von dem Vorzeichen von $\Delta x$. Auf diese Weise wird erreicht, daß der Betrag von $\Delta x$ minimiert wird, was nichts anderes als einen Offsetabgleich dieses Signals bzw. des Sensorsignals S(x) bedeutet. In entsprechender Weise wird mittels der Steuerung 11 und dem Integrator 14 eine Offsetkorrektur des Signals S(y) anhand der Vorzeichenwerte von $\Delta y$ vorgenommen.

Hierbei ist zu beachten, daß die Offsetkorrektur der beiden Sensorsignale S(x) und S(y) unabhängig voneinander stattfindet, also die Bestimmung der Vorzeichen von $\Delta x$ und $\Delta y$ ebenso unabhängig voneinander ist wie die Arbeitsweise der Integratoren 12 und 14.

Wie oben bereits angedeutet, können den Integratoren 12 und 14 Begrenzer 13 bzw. 15 nachgeschaltet sein, die eine Begrenzung der Offsetkorrektursignale Kx und Ky vornehmen. Außerdem kann gegebenenfalls bei Erreichen der Grenzen vorgesehen sein, daß die Begrenzer 13 bzw. 15 die Integratoren 12 bzw. 14 zurücksetzen, so daß der mit jedem Zyklus sich fortsetzende Integrationsvorgang zur Erzeugung der Offsetkorrektursignale Kx und Ky bei dem Ausgangswert beginnt. Dies ist sinnvoll, da bei Erreichen der Grenzwerte angenommen werden kann, daß das System nachhaltig gestört wurde, so daß ein Rücksetzen sinnvoll ist.

In der bisherigen Beschreibung wurde von dem Fall ausgegangen, daß mit jedem neuen Zyklusdurchlauf der Wert beispielsweise des Offsetkorrektursignals Kx um den Wert KWx erhöht oder vermindert wird und daß der Wert KWx immer konstant ist. Dieser Wert KWx kann vorgegeben werden, wobei seine Größe von dem Einsatzzweck abhängig sein kann.

Darüber hinaus kann der Korrekturwert KWx jedoch auch dynamisch gewählt werden, und zwar abhängig von der Vorgeschichte. Dabei wird in einem Zyklusdurchlauf n der Wert von KWx dann verdoppelt, wenn in dem vorherigen Zyklusdurchlauf n-1 für die Koordinate Δx das gleiche Vorzeichen gefunden wurde wie im aktuellen Zyklusdurchlauf. Dies ist sinnvoll, da dann, wenn in beiden aufeinanderfolgenden Zyklendurchläufen für Δx das gleiche Vorzeichen gefunden wurde, klar ist, daß in beiden Zyklendurchläufen eine Offsetkorrektur in gleicher Richtung erfolgen muß. Damit liegt mit hoher Wahrscheinlichkeit ein größerer Offsetkorrekturfehler in dieser Richtung vor, so daß es sinnvoll ist, die Schrittweite, mit der das Offsetkorrektursignal K(x) in dieser Richtung verändert wird, zu erhöhen. Dabei kann vorteilhaft wie in jedem Zyklusdurchlauf, für den das gleiche Vorzeichen Δx gefunden wurde wie im vorherigen Zyklusdurchlauf, der Korrekturwert KWx gegenüber demjenigen des vorherigen Zyklusdurchlauf verdoppelt werden. Diese Verdoppelung erfolgt so lange, bis das Vorzeichen von Δx wechselt. Wenn ein Vorzeichenwechsel festgestellt wird, wird im nächsten Schritt der letzte Korrekturwert KWx, der zu groß war, rückgängig gemacht. Außerdem wird wieder mit dem kleinsten Korrekturwert begonnen.

In der Darstellung gemäß Fig. 2 kann diese Verdoppelung beispielsweise dadurch erreicht werden, daß die Steuerung 11 ein entsprechendes Signal an den Integrator 12 liefert, der den Korrekturwert KW(x) in entsprechender Anzahl in den Integrationsprozeß einbezieht.

Entsprechendes gilt selbstverständlich flir den Offsetkorrekturabgleich des Signals S(y) und die Arbeitsweise der Steuerung 11 und des Integrators 14 in bezug auf die Offsetkorrektur dieses Signals in Abhängigkeit des Vorzeichens der Mittelpunktkoordinate Δy.

In diesem Falle wird mit jedem neuen Zyklusdurchlauf ein Vergleich des Vorzeichens der jeweiligen Mittelpunktkoordinate Δx bzw. Δy mit dem Vorzeichen der entsprechenden Koordinate des vorherigen Zyklusdurchlaufs vorgenommen und ein entsprechendes Signal an die Integratoren 12 und 14 abgegeben.

Im Ergebnis wird mittels des erfindungsgemäßen Verfahrens erreicht, daß die Sensorsignale S(x) und S(y) unabhängig voneinander mittels der Offsetkorrektursignale Kx und Ky bezüglich eines gegebenenfalls vorhandenen Offsets bzw. Gleichanteils korrigiert werden, so daß die Mittel 7 zur Winkelberechnung eine optimale Bestimmung des Winkels vornehmen können. Die Vorgehensweise ist dabei relativ einfach, da nur eine Vorzeichenbestimmung der Mittelpunktkoordinaten Δx und Δy zu erfolgen hat und die Steuerung 11 in Abhängigkeit der gefundenen Vorzeichen wiederum Steuersignale an die Integratoren 12 und 14 liefert, die die aufintegrierten Offsetkorrektursignale Kx und Ky in jedem Zyklus anhand der gefundenen Vorzeichen von Δx bzw. Δy entsprechend korrigieren.

Insbesondere muß durch das erfindungsgemäße Verfahren keine aufwendige genaue Bestimmung der Werte von Δx und Δy vorgenommen werden, welche gegebenenfalls Mikroprozessoren oder Ähnliches erfordert. Somit kann die Anordnung einfach gehalten werden, ohne daß bezüglich des Offsetabgleichs wesentliche Nachteile in Kauf genommen werden müssen.

**Patentansprüche**

1. Verfahren zum Offsetabgleich zweier orthogonaler Sensorsignale S(x) und S(y), welche von zwei Sensoren (2,3) geliefert werden und vorzugsweise für Winkelmessungen vorgesehen sind, wobei der Offsetabgleich in Abhängigkeit der geometrischen Anordnung dreier Meßwertepaare P1(x1,y1), P2(x2,y2) und P3(x3,y3) der Sensorsignale S(x) und S(y) in einem Koordinatensystem erfolgt, wobei der Mittelpunkt eines Kreises, auf dem die drei Meßwertpaare P1(x1,y1), P2(x2,y2) und P3(x3,y3) in dem Koordinatensystem angeordnet sind, relativ zum Ursprung des Koordinatensystems Mittelpunktkoordinaten Δx und Δy aufweist, **dadurch gekennzeichnet,**
**daß** in einem sich wiederholenden Zyklus in jedem Zyklusdurchlauf eine Vorzeichenbestimmung der Werte Δx und Δy der Mittelpunktkoordinaten des Kreises, auf dem drei Meßwertepaare P1(x1,y1), P2(x2,y2) und P3(x3,y3) angeordnet sind,
vorgenommen wird, wobei in jedem Zyklusdurchlauf wenigstens eines der Meßwertpaare von dem im vorigen Zyklus verwendeten Meßwertpaaren abweicht, und daß Offsetkorrektursignale Kx und Ky erzeugt werden, mit denen die Sensorsignale S(x) und S(y) beaufschlagt werden,
**daß** das Offsetkorrektursignal Kx in jedem Zyklusdurchlauf in Abhängigkeit des Vorzeichens der Mittelpunktkoordinate Δx gegenüber dem Offsetkorrektursignal Kx des vorigen Zyklusdurchlaufs um einen Korrekturwert KWx erhöht oder abgesenkt wird
und **daß** das Offsetkorrektursignal Ky in jedem Zyklusdurchlauf in entsprechender Weise in Abhängigkeit des Vorzeichens der Mittelpunktkoordinate Δy um einen Korrekturwert KWy erhöht oder abgesenkt wird.

2. Verfahren nach Anspruch 1, **dadurch gekennzeichnet, daß** mittels Integration in jedem Zyklus die Offsetkorrektursignale Kx und Ky des vorigen Zyklus um die Korrekturwerte KWx bzw. KWy des aktuellen Zyklus erhöht bzw.

vermindert werden.

3.  Verfahren nach Anspruch 1, **<u>dadurch gekennzeichnet,</u> daß** die Korrekturwerte KWx bzw. KWy einen konstanten, vorgebbaren Wert haben.

4.  Verfahren nach Anspruch 1, **<u>dadurch gekennzeichnet,</u> daß** in einem Zyklus der Korrekturwert KWx verdoppelt wird, wenn in dem vorigen Zyklus die Mittelpunktkoordinate $\Delta x$ das gleiche Vorzeichen hatte wie im aktuellen Zyklus, und daß der Korrekturwert KWy verdoppelt wird, wenn in dem vorigen Zyklus die Mittelpunktkoordinate $\Delta y$ das gleiche Vorzeichen hatte wie im aktuellen Zyklus.

5.  Verfahren nach Anspruch 1, **<u>dadurch gekennzeichnet,</u> daß** nur solche drei Meßwertepaare P1(x1,y1), P2(x2,y2) und P3(x3,y3) für die Offsetkorrektursignalberechnung herangezogen werden, deren die drei Wertepaare P1 (x1,y1), P2(x2,y2) und P3(x3,y3) in dem Koordinatensystem verbindenden Geraden G12 und G23 einen Winkel von wenigstens 5 Grad zueinander aufweisen.

6.  Verfahren nach Anspruch 1, **<u>dadurch gekennzeichnet,</u> daß** eine Begrenzung der Werte der Offsetkorrektursignale Kx und Ky auf vorgegebene oder vorgebbare Grenzwerte vorgenommen wird.

7.  Verfahren nach Anspruch 6, **<u>dadurch gekennzeichnet,</u> daß** bei jedem Neustart des Verfahrens eine Initialisierung vorgenommen wird, bei der ein Setzen der Grenzwerte erfolgt.

8.  Verfahren nach Anspruch 1, **<u>dadurch gekennzeichnet,</u> daß** bei jedem Neustart des Verfahrens eine Initialisierung vorgenommen wird, bei der ein Setzen der Startwerte der Offsetkorrektursignale Kx und Ky vorgenommen wird.

9.  Verfahren nach Anspruch 1, **<u>dadurch gekennzeichnet,</u> daß** die Bestimmung des Vorzeichens des Mittelpunktkoordinatenwertes $\Delta x$ der drei Meßwertepaare P1(x1,y1), P2(x2,y2) und P3(x3,y3) gemäß der Entscheidungsvorschrift

$$\Delta x \geq 0, \textit{ wenn gilt}: Sign\{(b_{S23}-b_{S12})\}=Sign\{(a_{S12}-a_{S23})\}$$

$$\Delta x < 0, \textit{ wenn gilt}: Sign\{(b_{S23}-b_{S12})\}\neq Sign\{(a_{S12}-a_{S23})\}$$

vorgenommen wird, wobei gilt:

$$a_{S12} = -\frac{x2-x1}{y2-y2}, \qquad a_{S23} = -\frac{x3-x2}{y3-y2}, \qquad b_{S12} = \frac{y1+y2}{2} + \frac{x2-x1}{y2-y1}\cdot\frac{x1+x2}{2}$$

*und*

$$b_{S23} = \frac{y2+y3}{2} + \frac{x3-x2}{y3-y2}\cdot\frac{x2+x1}{2}.$$

10. Verfahren nach Anspruch 1, **<u>dadurch gekennzeichnet,</u> daß** die Bestimmung des Vorzeichens des Mittelpunktkoordinatenwertes $\Delta y$ der drei Meßwertepaare P1(x1,y1), P2(x2,y2) und P3(x3,y3) in einem transformierten Koordinatensystem KS' mit der Transformationsvorschrift

$$KS\{x,y\}\rightarrow KS\{y',x'\}$$

gemäß der Entscheidungsvorschrift

$$\Delta y \geq 0, \textit{ wenn gilt}: Sign\{(b'_{S23}-b'_{S12})\}=Sign\{(a'_{S12}-a'_{S23})\}$$

$$\Delta y < 0, \textit{ wenn gilt}: Sign\{(b'_{S23}-b'_{S12})\}\neq Sign\{(a'_{S12}-a'_{S23})\}$$

vorgenommen wird, wobei gilt:

$$a'_{S12} = -\frac{y2 - y1}{x2 - x2}, \qquad a'_{S23} = -\frac{y3 - y2}{x3 - x2}, \qquad b'_{S12} = \frac{x1 + y2}{2} + \frac{y2 - y1}{x2 - x1}\cdot\frac{y1 + y2}{2}$$

*und*

$$b'_{S23} = \frac{x2 + x3}{2} + \frac{y3 - y2}{x3 - x2}\cdot\frac{y2 + y1}{2}.$$

**Claims**

1. A method for offset compensation of two orthogonal sensor signals S(x) and S(y), which are supplied by two sensors (2,3) and are preferably designed for angle measurements, the offset compensation taking place in dependence on the geometric arrangement of three pairs of test values P1(x1, y1), P2(x2, y2) and P3(x3, y3) of the sensor signals S(x) and S(y) in a system of coordinates, the center of a circle on which the three pairs of test values P1(x1, y1), P2(x2, y2) and P3(x3, y3) are situated in the system of coordinates having center coordinates $\Delta$x and $\Delta$y relative to the origin of the system of coordinates,
**characterized in that** a sign determination is carried out of the values $\Delta$x and $\Delta$y of the center coordinates of the circle on which the three pairs of test values P1(x1, y1), P2(x2, y2) and P3(x3, y3) are situated in a repetitive cycle in each measuring cycle, while in each measuring cycle at least one of the pairs of test values differs from the pair of test values used in the preceding measuring cycle, and correction signals Kx and Ky are generated with which the sensor signals S(x) and S(y) are complemented,
**in that** in every measuring cycle the offset correction signal Kx is increased or decreased by a correction value KWx with respect to the offset correction signal Kx of the previous measuring cycle in dependence on the sign of the center coordinate $\Delta$x , and
**in that** in every measuring cycle the offset correction signal Ky is increased or decreased by a correction value KWy in dependence on the sign of the center coordinate $\Delta$y in a similar manner.

2. A method as claimed in claim 1, **characterized in that** in each cycle the offset correction signals Kx and Ky of the previous cycle are increased or decreased by the respective correction values KWx and KWy of the present cycle by means of integration.

3. A method as claimed in claim 1, **characterized in that** the correction values KWx and KWy have a constant, programmable value.

4. A method as claimed in claim 1, **characterized in that** the correction value KWx is doubled in a cycle if in the preceding cycle the center coordinate $\Delta$x had the same sign as in the present cycle, and **in that** the correction value KWy is doubled in a cycle if in the preceding cycle the coordinate $\Delta$y had the same sign as in the present cycle.

5. A method as claimed in claim 1, **characterized in that** only those pairs of test values P1(x1, y1), P2(x2, y2) and P3(x3, y3) have their offset correction signals calculated of which the straight lines G12 and G23 interconnecting said three pairs of values P1(x1, y1), P2(x2, y2) and P3(x3, y3) in the system of coordinates enclose an angle of at least 5 degrees with one another.

6. A method as claimed in claim 1, **characterized in that** a limitation is provided of the values of the offset correction signals Kx and Ky to programmed or programmable limit values.

7. A method as claimed in claim 6, **characterized in that** an initialization, in which the limit values are set, is carried out each time the method is newly started.

8. A method as claimed in claim 1, **characterized in that** an initialization, in which the start values of the offset correction signals Kx and Ky are reset, is carried out each time the method is newly started.

9. A method as claimed in claim 1, **characterized in** the determination of the sign of the center coordinate value $\Delta$x of the three pairs of test values P1(x1, y1), P2(x2, y2) and P3(x3, y3) takes place in accordance with the decision equations:

$$\Delta x \geq 0 \ \textit{if: Sign}\{(b_{S23}-b_{S12})\}= \textit{Sign}\{(a_{S12}-a_{S23})\}$$

$$\Delta x < 0 \ \textit{if : Sign}\{(b_{S23}-b_{S12})\}\neq \textit{Sign}\{(a_{S12}-a_{S23})\}$$

for which it is true that:

$$a_{S12} = -\frac{x2 - x1}{y2 - y2}, \qquad a_{S23} = -\frac{x3 - x2}{y3 - y2}, \qquad b_{S12} = \frac{y1 + y2}{2} + \frac{x2 - x1}{y2 - y1}\cdot\frac{x1 + x2}{2}$$

*and*

$$b_{S23} = \frac{y2 + y3}{2} + \frac{x3 - x2}{y3 - y2}\cdot\frac{x2 + x1}{2}.$$

**10.** A method as claimed in claim 1, **characterized in that** the determination of the sign of the center coordinate value $\Delta y$ of the three pairs of test values P1(x1, y1), P2(x2, y2) and P3(x3, y3) takes place in a transformed system of coordinates KS' with the transform equation:

$$KS\{x,y\}\rightarrow KS\{y',x'\}$$

in accordance with the decision equations:

$$\Delta y < 0 \ \textit{if : Sign}\{(b'_{S23}-b'_{S12})\}\neq \textit{Sign}\{(a'_{S12}-a'_{S23})\}$$

$$\Delta y \geq 0 \ \textit{if: Sign}\{(b'_{S23}-b'_{S12})\}= \textit{Sign}\{(a'_{S12}-a'_{S23})\}$$

for which it is true that:

$$a'_{S12} = -\frac{y2 - y1}{x2 - x2}, \qquad a'_{S23} = -\frac{y3 - y2}{x3 - x2}, \qquad b'_{S12} = \frac{x1 + y2}{2} + \frac{y2 - y1}{x2 - x1}\cdot\frac{y1 + y2}{2}$$

*and*

$$b'_{S23} = \frac{x2 + x3}{2} + \frac{y3 - y2}{x3 - x2}\cdot\frac{y2 + y1}{2}.$$

**Revendications**

**1.** Procédé de compensation du décalage de deux signaux orthogonaux S(x) et S(y), qui sont fournis par deux sondes (2,3) et, de préférence, conçus pour des mesures d'angle, la compensation du décalage intervenant en fonction de l'agencement géométrique de trois paires de valeurs de mesure P1(x1, y1), P2(x2, y2) et P3(x3, y3) des signaux de sonde S(x) et S(y) dans un système de coordonnées, le centre d'un cercle sur lequel sont disposées les trois paires de valeurs de mesure P1(x1, y1), P2(x2, y2) et P3(x3, y3) dans le système de coordonnées ayant des coordonnées de centre $\Delta x$ et $\Delta y$ par rapport à l'origine du système de coordonnées,
**caractérisé en ce qu'**une détermination des signes des valeurs $\Delta x$ et $\Delta y$ des coordonnées du centre du cercle sur lequel sont disposées les trois paires de valeurs de mesure P1(x1, y1), P2(x2, y2) et P3(x3, y3) est effectuée dans un cycle récurrent dans chaque cycle de mesure, au moins une des paires de valeurs de mesure différant des paires de valeur de mesure utilisées dans le cycle précédent dans chaque passage de cycle et qu'il est produit des signaux de correction du décalage Kx et Ky avec lesquels les signaux de sonde S(x) et S(y) sont alimentés,
**que** le signal de correction du décalage Kx dans chaque passage de cycle est majoré ou réduit d'une valeur de correction KWx en fonction du signe de la coordonnée de centre $\Delta x$ par rapport au signal de correction du décalage Kx du passage de cycle précédent,

et **que** le signal de correction du décalage Ky est majoré ou réduit d'une valeur de correction Kwy dans chaque passage de cycle de manière correspondante en fonction du signe de la coordonnée de centre $\Delta y$.

**2.** Procédé selon la revendication 1, **caractérisé en ce que** les signaux de correction du décalage Kx et Ky du cycle précédent sont majorés ou réduits des valeurs de correction KWx et KWy du cycle actuel par intégration dans chaque cycle.

**3.** Procédé selon la revendication 1, **caractérisé en ce que** les valeurs de correction KWx et KWy ont une valeur constante à déterminer préalablement.

**4.** Procédé selon la revendication 1, **caractérisé en ce que**, dans chaque cycle, la valeur de correction KWx est doublée lorsque, dans le cycle précédent, la coordonnée du centre $2\Delta x$ avait le même signe que dans le cycle actuel et **en ce que** la valeur de correction KWy est doublée lorsque, dans le cycle précédent, la coordonnée du centre $\Delta y$ avait le même signe que dans le cycle actuel.

**5.** Procédé selon la revendication 1, **caractérisé en ce que** seules trois de ces paires de valeurs de mesure P1(x1, y1), P2(x2, y2) et P3(x3, y3) sont utilisées pour le calcul du signal de correction du décalage, les droites G12 et G23 reliant les trois paires de valeurs P1(x1, y1), P2(x2, y2) et P3(x3, y3) formant un angle réciproque d'au moins 5 degrés entre elles.

**6.** Procédé selon la revendication 1, **caractérisé en ce qu'**une limitation des valeurs des signaux de correction du décalage Kx et Ky est effectuée à des valeurs limites déterminées ou à déterminer préalablement.

**7.** Procédé selon la revendication 6, **caractérisé en ce qu'**une initialisation au cours de laquelle les valeurs limites sont fixées est effectuée à chaque fois que le procédé recommence.

**8.** Procédé selon la revendication 1, **caractérisé en ce qu'**une initialisation au cours de laquelle les valeurs de départ des signaux de correction du décalage Kx et Ky sont fixées est effectuée à chaque fois que le procédé recommence.

**9.** Procédé selon la revendication 1, **caractérisé en ce que** les moyens de correction (10) effectuent la détermination du signe de la valeur de coordonnée de centre $\Delta x$ des trois paires de valeurs de mesure P1(x1, y1), P2(x2, y2) et P3(x3, y3) conformément aux équations suivantes:

$$\Delta x \geq 0 \; si : signe\{(b_{S23}\text{-}b_{S12})\}=signe\{(a_{S12}\text{-}a_{S23})\}$$

$$\Delta x < 0 \; si : signe\{(b_{S23}\text{-}b_{S12})\}\neq signe\{(a_{S12}\text{-}a_{S23})\}$$

$$b_{S12} = \frac{y1 + y2}{2} + \frac{x2 - x1}{y2 - y1}\cdot\frac{x1 + x2}{2}$$

et

$$a_{S23} = -\frac{x3 - x2}{y3 - y2},$$

dans lesquelles:

$$b_{S23} = \frac{y2 + y3}{2} + \frac{x3 - x2}{y3 - y2}\cdot\frac{x2 + x1}{2}.$$

$$a_{S12} = -\frac{x2 - x1}{y2 - y2},$$

**10.** Procédé selon la revendication 1, **caractérisé en ce que** la détermination du signe de la valeur de coordonnée du centre $\Delta y$ des trois paires de valeurs de mesure P1(x1, y1), P2(x2, y2) et P3(x3, y3) est effectuée dans un système de coordonnées transformé KS' avec l'équation de transformation

$$KS\{x,y\} \rightarrow KS\{y',x'\}$$

conformément aux équations de décision:

$$\Delta y \geq 0 \; si : signe\{(b'_{S23}-b'_{S12})\}=signe\{(a'_{S12}-a'_{S23})\}$$

$$\Delta y < 0 \; si : signe\{(b'_{S23}-b'_{S12})\}\neq signe\{(a'_{S12}-a'_{S23})\}$$

dans lesquelles:

$$b'_{S23} = \frac{x2 + x3}{2} + \frac{y3 - y2}{x3 - x2} \cdot \frac{y2 + y1}{2}.$$

$$b'_{S12} = \frac{x1 + y2}{2} + \frac{y2 - y1}{x2 - x1} \cdot \frac{y2 + y1}{2}$$

et

$$a'_{S23} = - \frac{y3 - y2}{x3 - x2},$$

$$a'_{S12} = - \frac{y2 - y1}{x2 - x2},$$

FIG. 1

FIG. 2